# EUROPEAN PATENT SPECIFICATION

(11) **EP 1 626 453 B1**
(45) Date of publication and mention of the grant of the patent: **28.03.2012**
(21) Application number: 05106807.0
(22) Date of filing: 25.07.2005
(51) Int. Cl.: H01M 8/02, H01M 8/10

(54) **Polymer electrolyte fuel cell**
Polymerelektrolyt-Brennstoffzelle
Pile à combustible à électrolyte polymère solide

(30) Priority: 30.07.2004 JP 2004223434
(43) Date of publication of application: 15.02.2006
(73) Proprietor: Sumitomo Chemical Company, Limited, Tokyo 104-8260 (JP)
(72) Inventor: Saito, Shin, Tsukuba-shi, Ibaraki (JP); Iwasaki, Katsuhiko, Tsukuba-shi, Ibaraki (JP)
(74) Representative: Henkel, Breuer & Partner

(56) References cited:
- EP-A- 1 113 517
- EP-A- 1 238 998
- EP-A- 1 289 042
- JP-A- 9 110 982
- JP-A- 11 116 679
- US-A- 6 007 933
- US-A1- 2003 166 824
- CABASSO I ET AL: "SYNTHESIS AND CHARACTERIZATION OF POLYMERS WITH PENDENT PHOSPHONATEGROUPS" JOURNAL OF APPLIED POLYMER SCIENCE, NEW YORK, NY, US, vol. 18, no. 7, 1 January 1974 (1974-01-01), pages 1969-1986, XP000575506

## Description

### BACKGROUND OF THE INVENTION

### Field of the Invention

The present invention relates to a polymer electrolyte fuel cell and in detail a polymer electrolyte fuel cell in which a membrane containing an aromatic polymer electrolyte is employed as a solid polymer electrolyte membrane.

### Description of the Related Art

Various attempts to searching for an energy source having less environmental load have been made in recent years. In these attempts , a fuel cell, particularly, a polymer electrolyte fuel cell is expectedly applied to a power source of automobiles and the like in view of the advantages that a discharge substance is only water, etc.

A polymer electrolyte fuel cell is an electric power plant for performing an electrochemical reaction by using hydrogen gas and the like as a material to directly convert chemical energy into electric energy.

This fuel cell is provided with a solid polymer electrolyte membrane having proton conductivity and an electrode comprising a catalyst layer and a gas diffusion layer, and a membrane-electrode assembly in which electrodes of an anode and a cathode are disposed on both surfaces of this membrane is formed to compose a unit cell by combining a separator and a gas sealing material on both sides thereof and compose a battery (stack) by laminating a plurality of these unit cells.

A membrane obtained from a polymer electrolyte such as perfluoroalkyl sulfonic acid, typified by Nafion (a registered trademark of Du Pont K.K.), has been used as a solid polymer electrolyte membrane for such a polymer electrolyte fuel cell, and the indicated problems are that costs are very high and heat resistance is low, etc.

On the other hand, a membrane containing an inexpensive polymer electrolyte replaceable with the above-mentioned polymer electrolyte has actively been developed in recent years. In particular, a polymer electrolyte membrane, in which a sulfonic acid group is introduced into aromatic polyether, having superior heat resistance and high film strength has been promising, such that a membrane comprising an aromatic polymer electrolyte having an ion exchange group in a side chain and a main chain is an aromatic system; for example, the following has been proposed: a membrane comprising a polymer electrolyte of sulfonated polyether ketone-based (Japanese Published Patent Publication No. 11-502249) and sulfonated polyether sulfone-based (Japanese Unexamined Patent Publication No. 10-45913, Japanese Unexamined Patent Publication No. 10-21943).

### SUMMARY OF THE INVENTION

A fuel cell using a solid polymer electrolyte membrane containing the above-mentioned aromatic polymer electrolyte, however, does not have sufficient durability, and it has been desired that this point be improved.

Through earnest studies for improving the durability of a fuel cell using a solid polymer electrolyte membrane containing an aromatic polymer electrolyte, the inventors of the present invention have completed the present invention through further various studies by finding out that the durability of a fuel cell is notably improved by using a specific unit cell such that a gas diffusion layer surrounds the whole outer edge of a gas flow field of a separator and has a larger area than an area occupied by the outer edge of a gas flow field of this separator.

That is to say, the present invention provides:
(1) a polymer electrolyte fuel cell having superior durability, comprising a solid polymer electrolyte membrane containing an aromatic polymer electrolyte, an electrode comprising a catalyst layer and a gas diffusion layer as an anode and a cathode to be joined on both surfaces of this solid polymer electrolyte membrane, a gas sealing material to be disposed in the periphery of the gas diffusion layer, and a separator having a reaction gas flow field, characterized in that said gas diffusion layer surrounds the whole outer edge of the gas flow field of said separator and has a larger area than an area occupied by the outer edge of the gas flow field of said separator, and the minimum clearance between the outer edge of the gas flow field of said separator and the periphery of the gas diffusion layer is from 2 to 10mm.
   In addition, the present invention provides:
(2) a fuel cell according to the above-mentioned (1) characterized in that the aromatic polymer electrolyte is a block copolymer having a segment into which an ion exchange group is introduced and a segment into which an ion exchange group is not introduced by one or more with respect to each of them,
(3) a fuel cell according to the above-mentioned (1) and (2) characterized in that the aromatic polymer electrolyte is a composition comprising a polymer electrolyte having only a sulfonic group as an ion exchange group and a polymer electrolyte having only a phosphonic group as an ion exchange group, and
(4) a fuel cell according to any of the above-mentioned (1) to (3) characterized in that the solid polymer electrolyte membrane is a composite membrane of the aromatic polymer electrolyte and a support.

According to the present invention, a polymer electrolyte fuel cell can offer notably improved durability and stable output over a long time for the reason that a gas diffusion layer in a unit cell surrounds the whole outer edge of a gas flow field of a separator and has a larger area than an area occupied by the outer edge of a gas flow field of this separator.

### BRIEF DESCRIPTION OF THE DRAWINGS

Fig. 1 is a cross-sectional view showing a unit cell in a conventional fuel cell;
Fig. 2 is a cross-sectional view showing an example of a unit cell in a fuel cell of the present invention;
Fig. 3 is a view showing an example of a separator to be employed for the present invention; and
Fig. 4 is a view showing an example of a gas sealing material to be employed for the present invention.

### DETAILED DESCRIPTION OF PREFERRED EMBODIMENTS

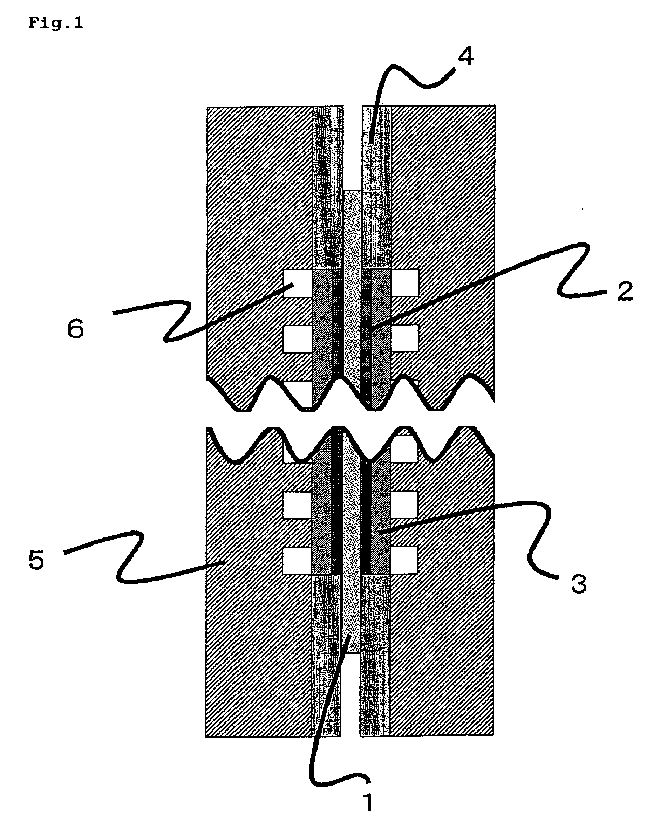

First, the structure of the above-mentioned unit cell as a basic constituent unit of a polymer electrolyte fuel cell is described in detail. Fig. 1 is a cross-sectional view showing a conventional unit cell.

Here, a unit cell is provided with a solid polymer electrolyte membrane having proton conductivity, a catalyst layer for serving an electrochemical reaction to be disposed on both sides thereof, and a gas diffusion layer for serving as gas diffusion into the catalyst layer and a charge collector. A separator having a reaction gas flow field and electron conductivity is disposed on both sides. In addition, a gas sealing material having high gas sealing properties and electron insulating properties is disposed in the outer periphery of the gas diffusion layer between the solid polymer electrolyte membrane and the separator without providing clearance.

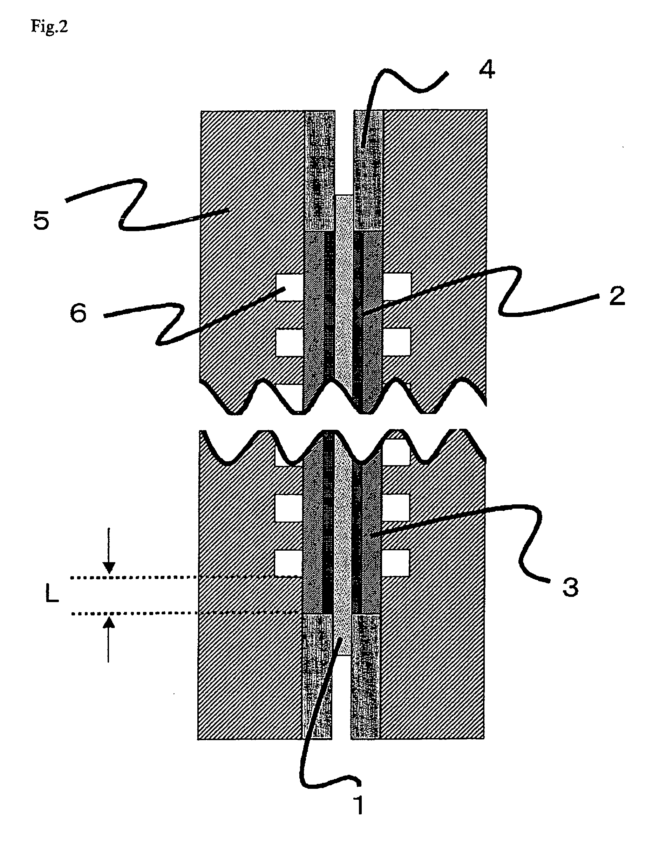

Conventionally, a catalyst layer and a gas diffusion layer cut out so as to be the same as a shape formed by the outer edge of a reaction gas flow field formed in a separator, that is, having the same shape and area as a shape formed by the outer edge of a gas flow field of a separator have generally been used, and in the present invention, as shown in Fig. 2, a gas diffusion layer has a shape surrounding the whole outer edge of a gas flow field of a separator and has a larger area than an area occupied by the outer edge of a gas flow field of this separator. Thus, a polymer electrolyte fuel cell can offer notably improved durability and stable output over a long time.

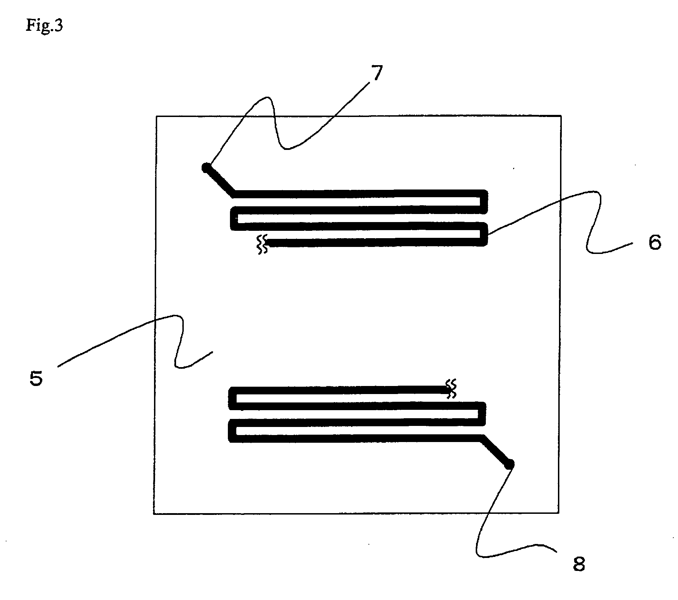

Here, a shape itself of a gas diffusion layer is not particularly limited, and shapes of polygons such as a square and a rectangle and a circle are used. A shape thereof may be similar or not to a shape formed by the outer edge of a gas flow field; for example, in the case where a shape formed by the outer edge of a gas flow field is a square, a gas diffusion layer of polygons such as a square and an octagon can be used, and in the case where a shape formed by the outer edge of a gas flow field is a circle, a gas diffusion layer of a circle and polygons such as a regular hexagon and a regular octagon can be used. As exemplified in Fig. 3, an inlet and an outlet of gas in a separator are separated from a region for serving diffusion of reaction gas contributing substantially to a fuel cell reaction, and a flow field is occasionally placed also therebetween, in which case the outer edge of a gas flow field is the outer edge of a region for serving diffusion of reaction gas contributing substantially to a fuel cell reaction.

In the present invention, as shown in Fig. 2, since a gas diffusion layer surrounds the whole outer edge of a gas flow field of a separator and has a larger area than an area occupied by the outer edge of a gas flow field of a separator, a clearance between the outer edge of the gas flow field and the boundary of the gas diffusion layer and a gas seal material.

While the clearance between the outer edge of the gas flow field of the separator and the periphery of the gas diffusion layer may be constant along the periphery of the gas diffusion layer, or may vary in the part of the periphery, the minimum clearance is represented as L.
In the present invention, the minimum clearance is defined as the distance between X and Y, wherein X is a point on the outer edge of the gas flow field, and Y is the intersection point of the line parallel to the plane of the separator form the tangential point at X and the periphery of the gas diffusion layer.

Here, L may be a constant value in the whole outer edge of a gas flow field or different depending on the location, is from 2 to 10 mm, preferably 2.2 to 8 mm and more preferably 2.5 to 6 mm. L of less than 2 mm does not allow shearing force over a membrane to be sufficiently reduced, while L of more than 10 mm causes efficient factor of utilization of reaction gas to be lowered; therefore, either case is not preferable.

The size and shape of a catalyst layer located on the opposite surface of a gas diffusion layer to a surface contacting with a gas flow field may be the same as a region occupied by the outer edge of a gas flow field or the same as a gas diffusion layer, desirably a gas diffusion layer from the viewpoint of simplifying manufacturing processes of cell and stack. In the case where the size and shape of a catalyst layer are smaller than a region occupied by the outer edge of a gas flow field, reaction gas can not efficiently be utilized, which is not preferable. In the case where a catalyst layer is not made to exist in a region except a region occupied by the outer edge of a gas flow field, a cushioning material corresponding to the thickness of a catalyst layer is disposed instead of a catalyst layer. The properties of a cushioning material are desirably low elastic modulus such as not to damage a solid polymer electrolyte membrane; for example, silicone rubber and PTFE and the like are used.

A gas diffusion layer in the present invention is not particularly limited if it promptly diffuses reaction gas flowing through a gas flow field into a catalyst layer and has high electron conductivity, and examples thereof include carbon paper and carbon cloth.

A material of a separator is not particularly limited, and both a separator of organic material and a metallic separator can be used, and then a separator desirably has high electron conductivity and restrains the loss of voltage caused in an electrochemical reaction to the utmost. A material having high thermal conductivity is preferable from the viewpoint of improving starting properties from the start of operation of a fuel cell to regular operation, and a material having high gas barrier properties is preferable by reason of preventing fuel gas from being dissipated. Further, in use environment of a fuel cell, occasionally water of pH 7 or less attaches to a surface of a separator and an electric potential of corrosion potential of metal or more is impressed, so that a material desirably has high corrosion resistance. Examples of such a material include graphite and metal having a conductive protective film.

A gas sealing material is used without particular limitation if it is a substance having elastic deformation and high gastightness. Examples of such a substance include polytetrafluoroethylene, polyvinylidene fluoride, a copolymer of tetrafluoroethylene and perfluoroalkyl vinyl ether, a copolymer of tetrafluoroethylene and hexafluoropropylene, polyethylene, polypropylene, polyethylene naphthalate, polyvinyl chloride, polyamides, polyimides, polyesters, polysulfones, polyether ketones, polyether ether ketones, polybenzimidazoles, phenolic resins, silicone rubber, silicon resin, inorganic materials and silicon dioxide.

A composition and a composite partially having these are also included therein; examples thereof include a mixture of the above-mentioned compounds, a laminate of the above-mentioned compounds and a material such that fluoro rubber is reinforced with glass fiber.

A solid polymer electrolyte membrane in the present invention contains an aromatic polymer electrolyte, and examples of an aromatic polymer electrolyte include a polymeric compound having an aromatic ring in a main chain and an ion exchange group in a side chain and/or a main chain. An aromatic polymer electrolyte soluble in a solvent is typically used.

Here, examples of an ion exchange group include cation exchange groups such as -SO₃H, -COOH, -PO(OH)₂, -POH(OH), -SO₂NHSO₂- and -Ph(OH) (Ph denotes a phenyl group), and anion exchange groups such as -NH₂, -NHR, -NRR', -NRR'R" and -NH₃⁺ (R, R' and R" denote an alkyl group, a cycloalkyl group and an aryl group). These ion exchange groups may be directly substituted with an aromatic ring composing a polymeric main chain, introduced into a substituent in an aromatic ring and an aliphatic chain composing a main chain as well as a side chain, or a combination thereof. A part or all of these groups may form a salt against counterion.

Among these, a cation exchange group is preferable, more preferably a sulfonic group and a phosphonic group, and most preferably a sulfonic group.

Typical examples of an aromatic polymer electrolyte include a polymer electrolyte in which a sulfonic group and/or a phosphonic group are introduced into a polymer having an aromatic ring in a main chain.

A polymer having an aromatic ring in a main chain may be, for example, such that a main chain is discontinued by a hetero atom such as an oxygen atom; examples of such an aromatic polymer electrolyte include a polymer electrolyte in which ion exchange groups such as a sulfonic group and a phosphonic group are introduced into each of polymers such as polyether ketone, polyether ether ketone, polysulfone, polyether sulfone, polyether ether sulfone, poly(arylene ether), polyimide, polyphenylene, poly((4-phenoxybenzoyl)-1,4-phenylene), polyphenylene sulfide and polyphenylquinoxalene, sulfoarylated polybenzimidazole, sulfoalkylated polybenzimidazole, phosphoalkylated polybenzimidazole (for example, Japanese Unexamined Patent Publication No. 9-110982), and phosphonated poly(phenylene ether) (for example, J. Appl. Polym. Sci., 18, 1969 (1974)).

Examples of such an aromatic polymer electrolyte include an alternating copolymer and a random copolymer having a repeating unit into which an ion exchange group is introduced and a repeating unit into which an ion exchange group is not substantially introduced by one or more with respect to each of them (for example, Japanese Unexamined Patent Publication No. 11-116679), and a block copolymer having a segment into which an ion exchange group is introduced and a segment into which an ion exchange group is not substantially introduced by one or more with respect to each of them (for example, Japanese Unexamined Patent Publication No. 2001-250567). Among these, a block copolymer having a segment into which an ion exchange group is introduced and a segment into which an ion exchange group is not substantially introduced by one or more with respect to each of them is preferable, and an ion exchange group thereof is preferably a sulfonic group and/or a phosphonic group, particularly preferably a sulfonic group.

A polymer electrolyte to be used for the present invention preferably has a molecular weight of typically 1000 to 1000000 through the expression of number-average molecular weight in terms of polystyrene byGPC process; the lower limit is preferably 5000 or more, particularly preferably 10000 or more, and the upper limit is preferably 500000 or less, particularlypreferably 300000 or less.

Here, a number-average molecular weight of less than 1000 brings a tendency to lower membrane strength, while a number-average molecular weight of more than 1000000 brings a tendency to make membrane-forming working difficult for the reason that it takes time to be dissolved in a solvent and solution viscosity is increased too much, either of which case is not preferable.

The ion exchange capacity of a polymer electrolyte is preferably 0.2 to 4 meq/g; the lower limit is more preferably 0.5 or more, particularly preferably 0.8 or more, and the upper limit is more preferably 3.0 or less, particularly preferably 2.5 or less. An ion exchange capacity of less than 0.2 meq/g causes output as a fuel cell to be lowered by reason of lowering ionic conductance, while an ion exchange capacity of more than 4.0 meq/g causes water resistance of an obtained membrane to be lowered, either of which case is not preferable.

With regard to a solid polymer electrolyte membrane to be used for the present invention, an electrolyte component comprises the above-mentioned polymer electrolyte, which solid polymer electrolyte membrane can also contain typically used addition agents such as a plasticizer, a stabilizer, a release agent and a water-retaining agent, as required within a range of not notably disturbing proton conducting power.

In particular, it is known that peroxide is produced in a catalyst layer and the produced peroxide is changed into radical kind while diffused to deteriorate a polymer electrolyte, and thus a stabilizer allowing radical resistance is desirably added. Examples of such a stabilizer include low-molecular weight compounds such as a phenolic compound of 4,4'-butylidenebis(2-tert-butyl-5-methylphenol) (trade name: SUMILIZER BBM-S, manufactured by SUMITOMO CHEMICAL CO., LTD.), a compound containing a phosphorus atom of 2,4,8,10-tetra-tert-butyl-6-[3-(3-methyl-4-hydroxy-5-tert-b utylphenyl)propoxy]dibenzo[d,f][1,3,2]dioxaphosphepine (trade name: SUMILIZER GP, manufactured by SUMITOMO CHEMICAL CO. , LTD.) and additionally a compound containing a sulfur atom of pentaerythrityl-tetrakis-(3-dodecyl thiopropionate) (trade name: SUMILIZER TP-D, manufactured by SUMITOMO CHEMICAL CO., LTD.), and a polymeric compound having a hydroxyl group and a functional group containing a phosphorus atom in these low-molecular weight compounds. Among them, aromatic polymeric phosphonic acids such that a phosphonic group bonds directly to an aromatic ring, which are described in Japanese Unexamined Patent Publications No. 2003-238678 and No. 2003-282096, offer high effect and are appropriately used. These aromatic polymeric phosphonic acids can also be used as an aromatic polymer electrolyte in the present invention, whereby it is needless to say that also a composition comprising these polymer electrolytes having a phosphonic group and a polymer electrolyte having a sulfonic group becomes a preferable component of a polymer electrolyte membrane of the present invention.

Here, the added quantity in the case of using an addition agent is preferably 0.1 wt% to 50 wt% with respect to membrane weight. An added quantity of less than 0.1 wt% brings a tendency not to sufficiently perform the effect of an addition agent, while an added quantity of more than 50 wt% brings a tendency to lower proton conductivity of a solid polymer electrolyte membrane, each of which case is not preferable.

A method of manufacturing a solid polymer electrolyte membrane is not particularly limited, and the following are preferable: a method of using a solution containing a polymer electrolyte and an addition agent used as required to form this into a membrane, and a method of compounding this with a support to obtain a polymer electrolyte composite membrane.

Here, a method of using a solution to form a membrane is preferably a method of forming a membrane by applying a solvent solution onto a base material through flow casting to remove the solvent, examples of which solvent include polar solvents such as N,N-dimethylformamide, N,N-dimethylacetamide, N-methyl-2-pyrrolidone and dimethyl sulfoxide, halogen-based solvents such as dichloromethane, chloroform, 1,2-dichloroethane, chlorobenzene and dichlorobenzene, alcohols such as methanol, ethanol and propanol, alkylene glycol monoalkyl ethers such as ethylene glycol monomethyl ether, ethylene glycol monoethyl ether, propylene glycol monomethyl ether and propylene glycol monoethyl ether, or a mixture of two kinds or more thereof. Among them, N,N-dimethylformamide, N,N-dimethylacetamide, N-methyl-2-pyrrolidone, N,N-dimethyl sulfoxide, a mixed solvent of dichloromethane/alcohol and a mixed solvent of chloroform/alcohol are preferable by reason of high solubility of a polymer electrolyte therein.

A base material to be used for forming a membrane is not particularly limited if it has resistance to solvents and a membrane can be peeled thereoff after being formed, and the following are typically used: glass plate, PET (polyethylene terephthalate) film, stainless steel plate, stainless steel belt, silicon wafer and Teflon (registered trademark of Du Pont K.K.) plate. These base materials whose surface is subject to release treatment, embossing and matting as required can also be used. The membrane thickness can be controlled by solution concentration or application thickness onto a base material.

A method of compounding with a support to obtain a polymer electrolyte composite membrane is preferably a method of impregnating into a support.

Here, a support is a parent material into which a polymer electrolyte is impregnated and used mainly for further improving strength, flexibility and durability of a polymer electrolyte. Thus, a support satisfying the above-mentioned object of use, such as a fibril shape and a porous membrane shape, can be used independently of shape and material thereof, which porous membrane is used very effectively in the case of taking into consideration the favorable use as a separating membrane of a polymer electrolyte fuel cell.

Here, with regard to a porous membrane, the membrane thickness is typically 1 to 100 µm, preferably 3 to 30 µm and more preferably 5 to 20 µm, and the pore diameter is typically 0.01 to 10 µm, preferably 0.02 to 7 µm, and then the voidage is typically 20 to 98%, preferably 30 to 95%. Too thin membrane thickness of a porous membrane renders insufficient the effect of reinforcing strength or the reinforcement effect of allowing flexibility and durability after being compounded, so that gas leakage (cross leak) is easily caused. Meanwhile, too thick membrane thickness causes electric resistance to be raised, so that the obtained composite membrane is not preferable as a separating membrane of a polymer electrolyte fuel cell. Too small pore diameter makes the impregnation of a polymer electrolyte very difficult, while too large pore diameter brings a tendency to weaken the reinforcement effect of a polymer electrolyte. Too small voidage causes resistance as a solid polymer electrolyte membrane to be increased, while too large voidage causes the strength of a porous membrane itself to be generally weakened, leading to a decrease in the reinforcement effect.

A material of a porous membrane is preferably an aliphatic polymer or a fluorine-containing polymer from the viewpoint of heat resistance and in consideration of the reinforcement effect of physical strength.

Examples of an appropriately usable aliphatic polymer include polyethylene, polypropylene and an ethylene-propylene copolymer, and are not limited thereto. Polyethylene mentioned here is a generic term for ethylene-based polymers having the crystal structure of polyethylene, and for example, also includes a copolymer of ethylene and another monomer, specifically including a copolymer of ethylene and α-olefin named linear low-density polyethylene (LLDPE), and ultra-high-molecular-weight polyethylene. Polypropylene mentioned here is a generic term for propylene-based polymers having the crystal structure of polypropylene, and includes generally used propylene-based block copolymer and random copolymer.

Publicly known thermoplastic resin having at least one carbon-fluorine bond in a molecule is used as a fluorine-containing polymer. Typically, a structure such that all or most of hydrogen atoms of an aliphatic polymer are substituted with fluorine atoms is appropriately used.

Examples of an appropriately usable fluorine-containing polymer include polytrifluoroethylene, polytetrafluoroethylene, polychlorotrifluoroethylene, poly(tetrafluoroethylene-hexafluoropropylene), poly(tetrafluoroethylene-perfluoro alkyl ether) and polyvinylidene fluoride, and are not limited thereto. Among them, in the present invention, polytetrafluoroethylene and poly(tetrafluoroethylene-hexafluoropropylene) are preferable, particularly preferably polytetrafluoroethylene. The average molecular weight of these fluororesins is preferably 100000 or more in view of the favorableness of mechanical strength.

A solid polymer electrolyte membrane as described above is used in the present invention, and the thickness thereof is not particularly limited, preferably 3 to 200 µm, more preferably 4 to 100 µm and further more preferably 5 to 50 µm. Too thin membrane thickness brings a tendency to lower membrane strength, while too thick membrane thickness causes electric resistance to be raised, so as not to be preferable as a separating membrane of a polymer electrolyte fuel cell.

A fuel cell of the present invention may be used singly in a cell as a basic component of a fuel cell or used as a stack having a constitution of lamination in plurality in electric series, typically as a stack for obtaining practical electric output. In the case of manufacturing a stack, it is preferred to follow a constitution of a generally known polymer electrolyte fuel cell except for using a structure of the present invention. Examples of fuel to be used for a fuel cell include gas fuel such as hydrogen and mixed gas thereof, and liquid fuel such as methanol aqueous solution. Even the use of methanol aqueous solution as fuel allows cell and stack having a cell structure of the present invention to have superior durability. In the case of a fuel cell utilizing such liquid fuel, it is preferred to replace a member described as "a gas diffusion layer" in the specification with "a conductive substrate" in a liquid fuel type fuel cell.

### Examples

The present invention is further detailed hereinafter by examples, and is not limited thereto.

### Manufacture of an electrode

500 mg of platinum-supporting carbon supporting platinum by 30 wt% was added to 5 mL of Nafion solution (5 wt%, manufactured by ALDRICH CORPORATION) and sufficiently stirred to prepare a catalyst layer dispersion. This catalyst layer dispersion was applied onto carbon cloth (manufactured by E-TEK INCORPORATED) by screen printing so that platinum-carrying density was 0.6 mg/cm², and the solvent was removed to obtain a gas diffusion layer-catalyst layer assembly.

### Synthesis of a polymer electrolyte

### Synthetic Example 1: synthesis of a polyether sulfones

Into a flask was added 1000 g of Sumika Excel PES4003P manufactured by Sumitomo Chemical Co., Ltd. (hydroxyl group-ended polyether sulfone, number-average molecular weight: 39000, manufactured by Sumitomo Chemical Co., Ltd.), 7.59 g of potassium carbonate, 2500 ml of DMAc and 500 ml of toluene under nitrogen and the mixture was heated at 160°C and stirred for performing azeotropic dehydration. The solution was allowed to cool at room temperature, then, 53.6 g of decafluorobiphenyl was added and the mixture was heated and stirred at 80°C for 3.5 hours. After allowing to cool, the reaction liquid was dropped into a large amount of water, and the resulted precipitate was recovered by filtration, and washed with a methanol/acetone mixed solvent, then, dried at 80°C to obtain polyether sulfones (d) carrying a F group at both ends.

### Synthetic Example 2: synthesis of poly(2,6-diphenylphenylene ether)

2.94 g (30.0 mmol) of anhydrous cuprous chloride and 3.51 g (30.0 mmol) of N,N,N',N'-tetramethylethylenediamine were stirred in 1500 ml of chlorobenzene under the atmosphere at a temperature of 40°C for 60 minutes. 17.1 g (60.0 mmol) of 2,2',6,6'-tetramethyl bisphenol A and 148 g (600 mmol) of 2,6-diphenylphenol were added thereto and stirred under the atmosphere at a temperature of 40°C for 7 hours. After finishing the reaction, this was poured into methanol containing hydrochloric acid to precipitate a polymer, which was filtered out and dried to obtain poly (2, 6-diphenylphenylene ether) (PE3), both terminals of which were substituted with a hydroxyl group.

### Synthetic Example 3: synthesis of a polymer electrolyte

160 g of PE3, 32 g of potassium carbonate, 3500 ml of DMAc and 200 ml of toluene were charged into a flask provided with an azeotropic distilling means, and dehydrated under the azeotropic condition of toluene and water by stirring while heating to thereafter distill off toluene. 640 g of the above-mentioned d was added thereto and stirred while heated at a temperature of 80°C for 5 hours, at a temperature of 100°C for 5 hours and then at a temperature of 120°C for 3 hours. The reaction solution was dropped into a large quantity of hydrochloric acid-acidified methanol, and the obtained precipitate was recovered through filtration and dried under reduced pressure at a temperature of 80°C to obtain a block copolymer.

600 g of the obtained block copolymer was stirred with 6000 ml of 98%-sulfuric acid under room temperature, and made into a uniform solution, which thereafter was further stirred continually for 24 hours. The obtained solution was dropped into a large quantity of iced water, and the obtained sediment was recovered through filtration and further repeatedly subjected to mixer washing by ion exchange water until the wash liquid became neutral, and thereafter dried under reduced pressure at a temperature of 40°C to obtain a sulfonated block copolymer A.

### Synthetic Example 4: synthesis of a polymer electrolyte

25 g (0.11mol) of potassium salt of 2,5-dihydroxybenzene sufonic acid, 60.17 g (0.123mol) of dipotassium salt of 4,4-diflorodiphenylsulfone-3,3'-disufonicacid, 15.89 g (0.115 mol) of potassium carbonate, 341 ml of dimethylsulfoxide (DMSO) and 68 ml of toluene were charged into a flask provided with an azeotropic distilling means under Ar atmosphere. And then, dehydrated under the azeotropic condition of toluene and water at 150 0C of bath temperature, and hydrophilic oligomer was obtained after stirring for 6 hours by keeping the temperature at 140 °C.

61.32 g (0.245mol) of 4,4-dihydroxydiphenylsufone, 58.95 g (0.232mol) of 4,4-diflorodiphenylsulfone, 37.57 g (0.272mol) of potassium carbonate, 481 ml of DMSO and 96 ml of toluene were charged into a flask provided with an azeotropic distilling means under Ar atmosphere. And then, dehydrated under the azeotropic condition of toluene and water at 150 °C of bath temperature, and hydrophobic oligomer was obtained after stirring for 18.5 hours in total while raising the temperature to 150 °C.

After the reaction solution was stand to cool, the reaction solution was dropped to a large amount of hydrochloric acid, and the obtained precipitate was recovered through filtration. Then, after filtration and washing with water until the washings shoed neutral, dried under reduced pressure at a temperature of 60°C to obtain a block copolymer B as shown below.

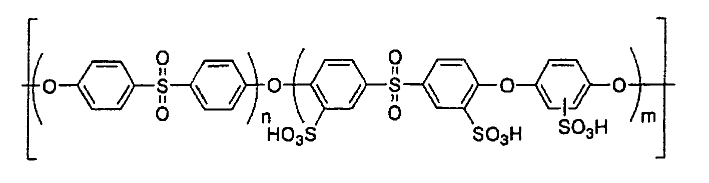

### Synthesis of an addition agent AD-1

By the same procedure described in Reference Example of JP 2005-33834 A, a polymer AD-1 containing phosphonic acid group was obtained.

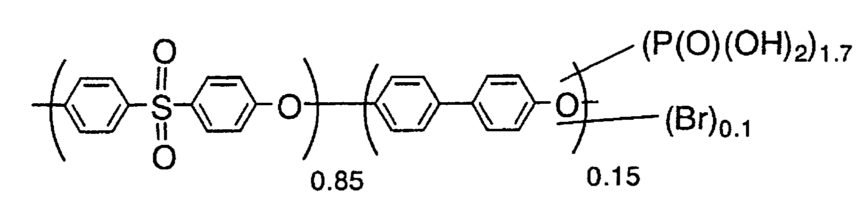

### Synthesis of an addition agent AD-2

According to a method described in JP H10-021343 A, 4,4'-dihydroxydiphenylsulfone, 4,4'-dihydroxybiphenyl, and 4,4'-dichlorodipehylsulfone were reacted at the molar ration of 4:6:10 in the presence of potassium carbonate in the diphenylsulfone as solvent to obtain a random copolymer below.

Ant then, according to a method described in JP 2003-282096 A, the above copolymer was brominating, esterifying with phosphonic acid, and hydrolysis to obtain a polymer AD-2 containing phosphonic acid group which was substituted by 0.2 of Br and 1. 7 of phophonic acid group per repeating unit derived from 4,4'-disphenol as shown below.

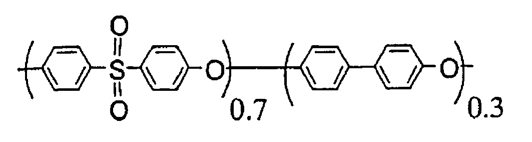

Ant then, according to a method described in JP 2003-282096 A, the above copolymer was brominating, esterifying with phosphonic acid, and hydrolysis to obtain a polymer AD-2 containing phosphonic acid group which was substituted by 0.2 of Br and 1.7 of phophonic acid group per repeating unit derived from 4,4'-disphenol as shown below.

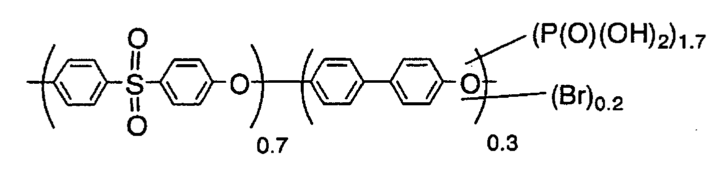

### Forming of a solid polymer electrolyte membrane (PEM-A)

A solution in which a block copolymer A and an addition agent were dissolved in NMP by a concentration of 27 wt% was prepared by using a mixture of the block copolymer A and AD-2 at a weight ratio of 95:5, and dropped into a porous membrane (thickness of 11um and voidage of 56%) made of polyethylene fixed onto a glass plate. The solution was uniformly applied over the porous membrane by using a wire coater, and dried under normal pressure at a temperature of 80°C while controlling the coating thickness by using a bar coater with 0.3 mm-clearance. Thereafter, the porous membrane was immersed in 1 mol/L-hydrochloric acid and further washed in ion exchange water to thereby obtain a solid polymer electrolyte membrane PEM-A, thickness of 27um.

### Forming of a solid polymer electrolyte membrane (PEM-B)

A solution in which a block copolymer B and an addition agent were dissolved in NMP by a concentration of 27 wt% was prepared by using a mixture of the block copolymer B and AD-1 at a weight ratio of 90:10, and dropped into a porous membrane (thickness of 8um and voidage of 65%) made of polyethylene fixed onto a glass plate. The solution was uniformly applied over the porous membrane by using a wire coater, and dried under normal pressure at a temperature of 80°C while controlling the coating thickness by using a bar coater with 0.3 mm-clearance. Thereafter, the porous membrane was immersed in 1 mol/L-hydrochloric acid and further washed in ion exchange water to thereby obtain a solid polymer electrolyte membrane PEM-B, thickness of 27um.

### Manufacture (1) of a unit cell of a polymer electrolyte fuel cell

A commercially available JARI standard cell (sold by EIWA CORPORATION) was used. A gas flow field as shown in Fig. 3 was cut on a separator, and a region thereof for serving diffusion of reaction gas contributing substantially to a fuel cell reaction was 5.2 cm × 5.2 cm. A gas sealing material was a laminate (thickness of 230 µm, 8.0 cm × 8.0 cm) of silicone rubber-polyethylene naphthalate-silicone rubber, off which the central region of 5.2 cm × 5.2 cm was cut. The above-mentioned solid polymer electrolyte membrane cut out for 7.5 cm × 7.5 cm and gas diffusion layer-catalyst layer joining body cut out for 5.2 cm × 5.2 cm were built in this cell to obtain a unit cell.

### Manufacture (2) of a unit cell of a polymer electrolyte fuel cell

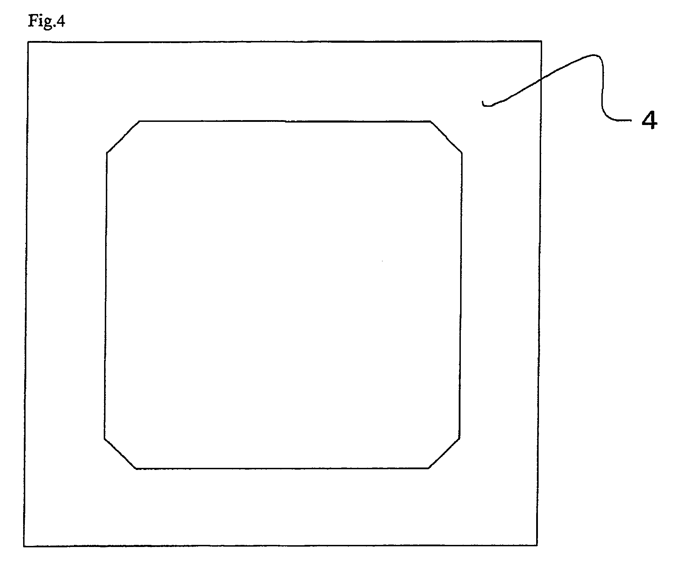

A commercially available JARI standard cell (sold by EIWA CORPORATION) was used. A gas flow field as shown in Fig. 3 was cut on a separator, and a region thereof for serving diffusion of reaction gas contributing substantially to a fuel cell reaction was 5.2 cm × 5.2 cm. A gas sealing material was a laminate (thickness of 230 µm, 8.0 cm × 8.0 cm) of silicone rubber-polyethylene naphthalate-silicone rubber, off which an octagon was cut in the center as shown in Fig. 4, and the long side thereof was 4.9 cm in length and the short side was 0.4 cm in length. In the case of this cell, L in Fig. 2 was equivalent to 1 mm. The above-mentioned solid polymer electrolyte membrane cut out for 7.5 cm × 7.5 cm and gas diffusion layer-catalyst layer assembly cut out for the same shape as a cutting-off portion of the gas sealing material were built in this cell to obtain a unit cell.

### Manufacture (3) of a unit cell of a polymer electrolyte fuel cell

A commercially available JARI standard cell (sold by EIWA CORPORATION) was used. A gas flow field as shown in Fig. 3 was cut on a separator, and a region thereof for serving diffusion of reaction gas contributing substantially to a fuel cell reaction was 5.2 cm × 5.2 cm. A gas sealing material was a laminate (thickness of 230 µm, 8.0 cm × 8.0 cm) of silicone rubber-polyethylene naphthalate-silicone rubber, off which an octagon was cut in the center as shown in Fig. 4, and the long side thereof was 5.2 cm in length and the short side was 0.4 cm in length. In the case of this cell, L in Fig. 2 was equivalent to 3 mm. The above-mentioned solid polymer electrolyte membrane cut out for 7.5 cm × 7.5 cm and gas diffusion layer-catalyst layer joining body cut out for the same shape as a cutting-off portion of the gas sealing material were built in this cell to obtain a unit cell.

### Manufacture (4) of a unit cell of a polymer electrolyte fuel cell

A commercially available JARI standard cell (sold by EIWA CORPORATION) was used. A gas flow field as shown in Fig. 3 was cut on a separator, and a region thereof for serving diffusion of reaction gas contributing substantially to a fuel cell reaction was 5.2 cm × 5.2 cm. A gas sealingmaterial was a laminate (thickness of 230 µm, 8.0 cm × 8.0 cm) of silicone rubber-polyethylene naphthalate-silicone rubber, off which an octagon was cut in the center as shown in Fig. 4, and the long side thereof was 5.4 cm in length and the short side was 0.4 cm in length. In the case of this cell, L in Fig. 2 was equivalent to 4 mm. The above-mentioned solid polymer electrolyte membrane cut out for 7.5 cm × 7.5 cm and gas diffusion layer-catalyst layer joining body cut out for the same shape as a cutting-off portion of the gas sealing material were built in this cell to obtain a unit cell.

### Example 1

A unit cell was manufactured by a method described in Manufacture (3) of a unit cell of a polymer electrolyte fuel cell in which PEM-A was used as a polymer electrolyte membrane to perform a fuel cell continuous power generation test in constant electric current. The test conditions were as follows; cell temperature: 95°C, bubbler temperature: 95°C (anode), 95°C (cathode), gas flow rate : 70 mL/min (anode), 160 mL/min (cathode), back pressure: 0.1 MPaG (anode), 0.1 MPaG (cathode), and electric current: 2.5 A. The voltage shifted around a constant value (0.8 V) from the start of the test to 1000 hours after the start, and a drop was not observed.

### Example 2

A unit cell was manufactured by a method described in Manufacture (3) of a unit cell of a polymer electrolyte fuel cell in which PEM-A was used as a polymer electrolyte membrane to perform a fuel cell continuous power generation test in constant electric current. The test conditions conformed to Example 1 except that bubbler temperature was 85°C (anode) and 85°C (cathode). The voltage shifted around a constant value (0.67 V) from the start of the test to 1000 hours after the start, and a drop was not observed.

### Example 3

A unit cell was manufactured by a method described in Manufacture (3) of a unit cell of a polymer electrolyte fuel cell in which PEM-B was used as a polymer electrolyte membrane to perform a fuel cell continuous power generation test in constant electric current. The test conditions were as follows; cell temperature: 95°C, bubbler temperature: 95°C (anode), 95°C (cathode), gas flow rate: 140 mL/min (anode), 360 mL/min (cathode), back pressure: 0 MPaG (anode), 0 MPaG (cathode), and electric current: 5 A. The voltage shifted around a constant value (0.45 V) from the start of the test to 545 hours after the start, and a drop was not observed.

### Example 4

A unit cell was manufactured by a method described in Manufacture (4) of a unit cell of a polymer electrolyte fuel cell in which PEM-B was used as a polymer electrolyte membrane to perform a fuel cell continuous power generation test in constant electric current. The test conditions conformed to Example 3. The voltage shifted around a constant value (0.55 V) from the start of the test to 530 hours after the start, and a drop was not observed.

### Comparative Example 1

A unit cell was manufactured by a method described in Manufacture (1) of a unit cell of a polymer electrolyte fuel cell in which PEM-A was used as a polymer electrolyte membrane to perform a fuel cell continuous power generation test in constant electric current. The test conditions conformed to Example 1. The voltage shifted around a constant value (0.78 V) from the start of the test to approximately 120 hours after the start; however, after approximately 120 hours passed, the occurrence of gas leak made it impossible to continue to generate electricity.

### Comparative Example 2

A unit cell was manufactured by a method described in Manufacture (1) of a unit cell of a polymer electrolyte fuel cell in which PEM-B was used as a polymer electrolyte membrane to perform a fuel cell continuous power generation test in constant electric current. The test conditions conformed to Example 3. At the beginning of the test, the voltage was 0.40V; however, after approximately 200 hours passed, the voltage dropped to 0.31V, and after approximately 261 hours passed, the occurrence of gas leak made it impossible to continue to generate electricity.

### Comparative Example 3

A unit cell was manufactured by a method described in Manufacture (2) of a unit cell of a polymer electrolyte fuel cell in which PEM-B was used as a polymer electrolyte membrane to perform a fuel cell continuous power generation test in constant electric current. The test conditions conformed to Example 3. The voltage shifted around a constant value (0.52 V) from the start of the test to approximately 232 hours after the start; however, after approximately 232 hours passed, the occurrence of gas leak made it impossible to continue to generate electricity.

Through the above results, it is found that the durability of a polymer electrolyte fuel cell is drastically improved by enlarging an area of a gas diffusion layer than an area occupied by the outer edge of a gas flow field of a separator.

## Claims

1. A polymer electrolyte fuel cell comprising:
a solid polymer electrolyte membrane containing an aromatic polymer electrolyte;
an electrode comprising a catalyst layer and a gas diffusion layer as an anode and a cathode to be joined on both surfaces of this solid polymer electrolyte membrane;
a gas sealing material to be disposed in a periphery of the gas diffusion layer; and
a separator having a reaction gas flow field;
**characterized in that**
said gas diffusion layer surrounds the whole outer edge of the gas flow field of said separator and has a larger area than an area occupied by the outer edge of the gas flow field of said separator, and
the minimum clearance between the outer edge of the gas flow field of said separator and the periphery of the gas diffusion layer is from 2 to 10 mm.

2. The polymer electrolyte fuel cell according to Claim 1, wherein the aromatic polymer electrolyte is a block copolymer having a segment into which an ion exchange group is introduced and a segment into which an ion exchange group is not introduced by one or more with respect to each of them.

3. The polymer electrolyte fuel cell according to Claim 1, wherein the aromatic polymer electrolyte is a composition comprising a polymer electrolyte having only a sulfonic group as an ion exchange group and a polymer electrolyte having only a phosphonic group as an ion exchange group.

4. The polymer electrolyte fuel cell according to Claim 2, wherein the aromatic polymer electrolyte is a composition comprising a polymer electrolyte having only a sulfonic group as an ion exchange group and a polymer electrolyte having only a phosphonic group as an ion exchange group.

5. The polymer electrolyte fuel cell according to Claim 1, wherein the solid polymer electrolyte membrane is a composite membrane of the aromatic polymer electrolyte and a support.

6. The polymer electrolyte fuel cell according to Claim 2, wherein the solid polymer electrolyte membrane is a composite membrane of the aromatic polymer electrolyte and a support.

7. The polymer electrolyte fuel cell according Claim 3, wherein the solid polymer electrolyte membrane is a composite membrane of the aromatic polymer electrolyte and a support.

8. The polymer electrolyte fuel cell according to Claim 4, wherein the solid polymer electrolyte membrane is a composite membrane of the aromatic polymer electrolyte and a support.

## Patentansprüche

1. Polymerelektrolyt-Brennstoffzelle, umfassend:
eine Festpolymer-Elektrolyt-Membran, die einen Elektrolyt aus aromatischen Polymeren enthält;
eine Elektrode, die eine Katalysatorschicht und eine Gasdiffusionsschicht umfasst, als Anode bzw. Kathode, die auf den beiden Oberflächen dieser Festpolymer-Elektrolyt-Membran angebracht sind;
ein Gasdichtungsmaterial, das an der Peripherie der Gasdiffusionsschicht angebracht ist; und
einen Separator, der ein Reaktionsgasströmungsfeld aufweist;
**dadurch gekennzeichnet, dass**
die Gasdiffusionsschicht den gesamten Außenrand des Gasströmungsfeldes des Separators umschließt und eine größere Fläche als die Fläche, die durch den Außenrand des Gasströmungsfeldes des Separators beansprucht ist, aufweist, und
der minimale Abstand zwischen dem Außenrand des Gasströmungsfeldes des Separators und der Peripherie der Gasdiffusionsschicht 2 bis 10 mm beträgt.

2. Polymerelektrolyt-Brennstoffzelle nach Anspruch 1, wobei der Elektrolyt aus aromatischen Polymeren ein Blockcopolymer ist, das ein Segment, in das eine Ionenaustauschgruppe eingeführt ist, und ein Segment, in das eine Ionenaustauschgruppe nicht eingeführt ist, jeweils im Verhältnis von eins oder mehr in Bezug auf diese, aufweist.

3. Polymerelektrolyt-Brennstoffzelle nach Anspruch 1, wobei der Elektrolyt aus aromatischen Polymeren eine Zusammensetzung ist, die einen Polymerelektrolyt, der nur eine Sulfonsäuregruppe als Ionenaustauschgruppe aufweist, und einen Polymerelektrolyt, der nur eine Phosphonsäuregruppe als Ionenaustauschgruppe aufweist, umfasst.

4. Polymerelektrolyt-Brennstoffzelle nach Anspruch 2, wobei der Elektrolyt aus aromatischen Polymeren eine Zusammensetzung ist, die einen Polymerelektrolyt, der nur eine Sulfonsäuregruppe als Ionenaustauschgruppe aufweist, und einen Polymerelektrolyt, der nur eine Phosphonsäuregruppe als Ionenaustauschgruppe aufweist, umfasst.

5. Polymerelektrolyt-Brennstoffzelle nach Anspruch 1, wobei die Festpolymer-Elektrolyt-Membran eine Verbundmembran aus dem Elektrolyt aus aromatischen Polymeren und einem Träger ist.

6. Polymerelektrolyt-Brennstoffzelle nach Anspruch 2, wobei die Festpolymer-Elektrolyt-Membran eine Verbundmembran aus dem Elektrolyt aus aromatischen Polymeren und einem Träger ist.

7. Polymerelektrolyt-Brennstoffzelle nach Anspruch 3, wobei die Festpolymer-Elektrolyt-Membran eine Verbundmembran aus dem Elektrolyt aus aromatischen Polymeren und einem Träger ist.

8. Polymerelektrolyt-Brennstoffzelle nach Anspruch 4, wobei die Festpolymer-Elektrolyt-Membran eine Verbundmembran aus dem Elektrolyt aus aromatischen Polymeren und einem Träger ist.

## Revendications

1. Pile à combustible à électrolyte polymère comprenant :
une membrane électrolyte polymère solide contenant un électrolyte polymère aromatique ;
une électrode comprenant une couche de catalyseur et une couche de diffusion de gaz en tant qu'anode et cathode reliées sur les deux surfaces de cette membrane électrolyte polymère solide ;
un matériau d'étanchéité aux gaz à placer à la périphérie de la couche de diffusion de gaz ; et
un séparateur ayant un champ de circulation de gaz réactionnel ;
**caractérisée en ce que**
ladite couche de diffusion de gaz entoure tout le bord extérieur du champ de circulation de gaz dudit séparateur et comprend une zone plus grande qu'une zone occupée par le bord extérieur du champ de circulation de gaz dudit séparateur, et
le dégagement minimal entre le bord extérieur du champ de circulation de gaz dudit séparateur et la périphérie de la couche de diffusion de gaz est de 2 à 10 mm.

2. Pile à combustible à électrolyte polymère selon la revendication 1, dans laquelle l'électrolyte polymère aromatique est un copolymère séquencé ayant un segment dans lequel un groupe échangeur d'ions est introduit et un segment dans lequel un groupe d'échange d'ions n'est pas introduit par un ou plusieurs en ce qui concerne chacun d'eux.

3. Pile à combustible à électrolyte polymère selon la revendication 1, dans laquelle l'électrolyte polymère aromatique est une composition comprenant un électrolyte polymère ayant uniquement un groupe sulfonique comme groupe échangeur d'ions et un électrolyte polymère comprenant uniquement un groupe phosphonique comme groupe échangeur d'ions.

4. Pile à combustible à électrolyte polymère selon la revendication 2, dans laquelle l'électrolyte polymère aromatique est une composition comprenant un électrolyte polymère ayant uniquement un groupe sulfonique comme groupe échangeur d'ions et un électrolyte polymère ayant uniquement un groupe phosphonique comme groupe échangeur d'ions.

5. Pile à combustible à électrolyte polymère selon la revendication 1, dans laquelle la membrane électrolyte polymère solide est une membrane composite de l'électrolyte polymère aromatique et d'un support.

6. Pile à combustible à électrolyte polymère selon la revendication 2, dans laquelle la membrane électrolyte polymère solide est une membrane composite de l'électrolyte polymère aromatique et d'un support.

7. Pile à combustible à électrolyte polymère selon la revendication 3, dans laquelle la membrane électrolyte polymère solide est une membrane composite de l'électrolyte polymère aromatique et d'un support.

8. Pile à combustible à électrolyte polymère selon la revendication 4, dans laquelle la membrane électrolyte polymère solide est une membrane composite de l'électrolyte polymère aromatique et d'un support.
